# DEMANDE DE BREVET EUROPEEN

(11) **EP 2 806 143 A1**
(43) Date de publication de la demande: **26.11.2014**
(21) Numéro de dépôt: 14164928.5
(22) Date de dépôt: 16.04.2014
(51) Int. Cl.: F02D 41/04, F02D 41/00, B60W 10/06

(54) **Procédé d'arrêt d'un moteur thermique de véhicule automobile**

(30) Priorité: 22.05.2013 FR 1354571
(71) Demandeur: PEUGEOT CITROËN AUTOMOBILES SA, 78140 Velizy-Villacoublay (FR)
(72) Inventeur: Uzan, Jean-Francois, 92400 COURBEVOIE (FR); Robert, Francois-Xavier, 75008 PARIS 08 (FR); Milauvre, Alain, 78300 POISSY (FR); Doux, Florian, 92800 PUTEAUX (FR)

(57) **Abrégé**

Un procédé d'arrêt d'un moteur thermique de véhicule automobile est décrit, dans lequel, lorsqu'une demande d'arrêt est émise le moteur encore tournant, il est procédé à l'étape de fermeture de la vanne EGR suivie d'abord de l'étape de fermeture de l'admission d'air au plenum du moteur et ensuite de l'étape de coupure d'injection en carburant dans le moteur, caractérisé en ce que la durée (T1) de l'étape de fermeture de la vanne EGR jusqu'au début de l'étape de fermeture de l'admission d'air et la durée (T3) de l'étape de fermeture d'admission d'air jusqu'au début de l'étape de coupure d'injection sont minimisées au moins respectivement en fonction du taux de recirculation des gaz brûlés au plenum et d'une dépression seuil dans le plenum d'admission d'air au moteur, cette dépression seuil étant déterminée au moins en fonction des frottements internes régnant dans le moteur et diminuant pour des frottements augmentant.

## Description

L'invention porte sur un procédé d'arrêt d'un moteur thermique de véhicule automobile. Le procédé trouve une application particulière mais non limitative pour la gestion du pilotage de l'arrêt du moteur thermique dans un véhicule automobile hybride, c'est-à-dire équipé à la fois d'un moteur thermique et d'au moins un moteur autre que thermique, le plus fréquemment un moteur électrique, ou dans un véhicule automobile comportant un système STT ou « Stop and Start » en anglais, ce qui correspond à un système de démarrage et d'arrêt automatique du moteur thermique.

En effet, pour un groupe motopropulseur hybride ou équipé d'un système STT, pendant le cycle de roulage, le moteur thermique du véhicule peut être fréquemment arrêté de manière temporaire à des fins de minimisation de consommation de carburant et/ou pour la prestation « ZEV », c'est-à-dire la prestation en tant que véhicule à zéro émission.

Ces arrêts temporaires peuvent être très nombreux. Par exemple, statistiquement il a été calculé en moyenne que le nombre de démarrages et arrêts pendant la vie d'un véhicule pouvait atteindre 40.000 pour un groupe motopropulseur conventionnel, 300.000 pour un groupe motopropulseur équipé d'un système STT et 600.000 pour un groupe motopropulseur hybride. Ces nombres d'arrêt peuvent être doublés dans les situations les plus critiques d'utilisation du groupe motopropulseur, ces situations les plus critiques correspondant à 1% de la totalité des cas.

Pour gérer ces arrêts et démarrages, il est prévu d'associer au moteur thermique un superviseur de marches et arrêts du moteur thermique qui détermine, en fonction des différentes requêtes de marche du moteur thermique en provenance des différentes fonctionnalités du contrôle commande, une consigne de marche du moteur thermique. Cette consigne de marche reflète à chaque instant, après une éventuelle période transitoire de (re)démarrage du moteur thermique ou d'arrêt du moteur thermique, l'état stable dans lequel doit se trouver le moteur thermique afin de satisfaire les besoins du groupe motopropulseur : le moteur thermique doit être soit tournant soit arrêté.

Lors de chaque arrêt, qu'il soit temporaire, par exemple pendant le cycle de roulage à des fins de minimisation de consommation de carburant et/ou pour une prestation à zéro émission, ou qu'il soit long, par exemple en fin de cycle de roulage avec le moteur thermique tournant lorsque le conducteur coupe le contact, il est connu d'utiliser une procédure d'arrêt du moteur thermique qui se déroule sensiblement comme suit.

Quand une demande d'arrêt du moteur thermique est émise à partir d'un instant donné, il est immédiatement procédé à la fermeture de la vanne du système EGR pour « Exhaust Gas Recirculation » en anglais, c'est-à-dire, recirculation des gaz d'échappement en français, dans le moteur thermique tout en poursuivant le fonctionnement du moteur thermique. Ceci permet de purger le plenum d'admission d'air des gaz brûlés antérieurement recirculés à l'admission. Ainsi, si des gaz brûlés sont encore présents dans le plenum alors, ils sont progressivement remplacés par de l'air frais afin de favoriser le succès du prochain (re)démarrage du moteur thermique.

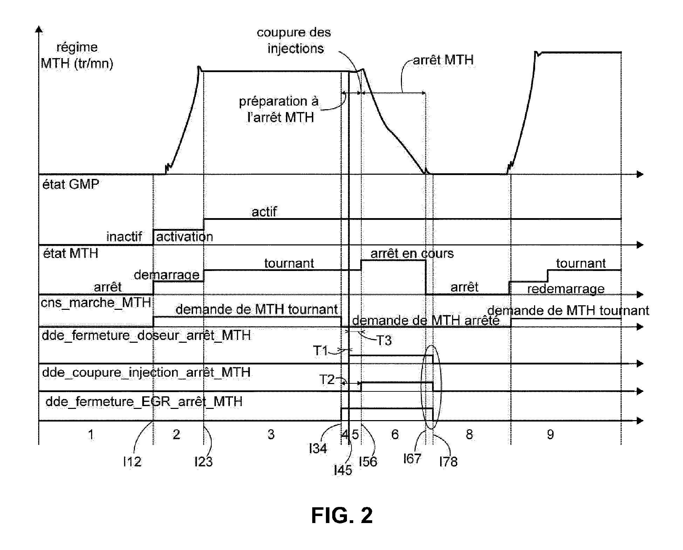

A partir d'une première durée dite T1 écoulée depuis l'instant de demande d'arrêt, cette durée T1 pouvant être nulle, il est procédé à une diminution de l'air admis dans les cylindres par fermeture totale du papillon pour un moteur à essence ou du volet doseur pour un moteur Diesel. La première durée T1, montrée notamment à la figure 2, est donc la durée entre le début de la fermeture de la vanne EGR et le début de la fermeture du doseur ou papillon pour l'admission d'air au plenum du moteur.

Lors de la fermeture totale du papillon ou du volet doseur, le moteur thermique continue à tourner, par ses propres combustions, et donc à pomper. Une dépression commence alors à se former dans le plenum. La pression diminue avec une vitesse qui dépend du régime du moteur thermique, des caractéristiques du plenum et de la perméabilité du papillon ou du volet doseur.

Après l'écoulement d'une seconde durée dite T2 depuis l'instant de demande d'arrêt, cette seconde durée étant supérieure à la première durée T1, la différence T3 des deux durées T2 - T1 étant assez longue pour créer une dépression suffisamment élevée, il est procédé à la coupure de l'injection de carburant au moteur pour arrêter le moteur thermique. La différence T3 des deux durées T2-T1 correspond à une durée dite de vannage par fermeture du papillon ou du volet doseur et s'écoule du début de fermeture du doseur ou papillon au plenum d'admission d'air jusqu'au début de la coupure de l'injection au moteur. Les durées T2 et T3 sont aussi indiquées à la figure 2.

Après la coupure de l'injection, le régime moteur décroît alors progressivement vers un régime nul avec une vitesse fonction de l'inertie du vilebrequin, du couple de frottement moteur et du couple indiqué du moteur, ce couple étant lié aux compressions et détentes du moteur. Les acyclismes dus aux compressions et détentes sont limités par les masses d'air introduites dans les cylindres, ces masses d'air étant d'autant plus faibles que la dépression dans le plenum est importante.

Il est supposé que l'augmentation de la différence de durée T3 entre les seconde durée T2 et première durée T1 favorise l'arrêt du moteur thermique pour les raisons suivantes :
- diminution de l'amplitude des compressions et détentes par diminution des quantités d'air admises lors de l'arrêt du moteur thermique,
- augmentation des efforts de pompage par les cylindres en phase d'admission donc diminution de la durée d'arrêt du moteur thermique.

En contrepartie, l'augmentation de la différence de durée T3 entre les durées T2 et T1 s'accompagne des inconvénients suivants :
- la création d'une dépression trop importante et/ou pendant une durée trop importante est nuisible à la consommation d'huile de lubrification du moteur, l'huile dans le carter étant aspirée vers le haut du moteur,
- l'augmentation de la durée de fonctionnement du moteur thermique en général en régulation de ralenti non optimal en termes de consommation de carburant.

La diminution de la durée de vannage est contrainte par le fait qu'il est nécessaire, avant d'arrêter le moteur par coupure de l'injection, de purger le plenum des gaz brûlés résiduels antérieurement recirculés par le système EGR. De plus, une diminution de la seconde durée T2 s'accompagne des inconvénients suivants :
- augmentation de l'amplitude des compressions et détentes par admission de quantités d'air en phase d'arrêt du moteur thermique plus importantes en raison d'une dépression plenum moindre,
- diminution des efforts de pompage par les cylindres en phase d'admission donc augmentation de la durée d'arrêt du moteur thermique. En revanche, cela présente l'avantage de diminuer la durée de fonctionnement du moteur thermique ce qui est optimal en termes de consommation de carburant.

Il existe donc pour chaque arrêt du moteur thermique un compromis entre, d'une part, la prestation arrêt du moteur thermique, principalement concernant la réduction du temps d'arrêt, l'acoustique, la réduction des acyclismes, c'est-à-dire la réduction du basculement du moteur sur ses cales et des claquements du volant double amortisseur et, d'autre part, la consommation de carburant nécessaire à la préparation de cet arrêt.

De ceci, il en est déduit que l'amélioration de la prestation arrêt du moteur thermique, entraînant la réduction de la durée de chute de régime et la réduction des acyclismes du moteur thermique, peut se faire avec l'augmentation de la durée de vannage égale à la différence de durée T3 entre les seconde durée T2 et première durée T1, donc avec une préparation à l'arrêt du moteur thermique plus longue. Une telle préparation n'est cependant pas favorable à une diminution de la consommation en carburant.

Le problème à la base de la présente invention est de concevoir un procédé d'arrêt d'un moteur thermique qui soit optimal pour la consommation de carburant tout en ne dégradant pas la prestation d'arrêt du moteur thermique en ce qui concerne notamment la réduction du temps d'arrêt, l'acoustique et la réduction des acyclismes.

Pour atteindre cet objectif, il est prévu selon l'invention un procédé d'arrêt d'un moteur thermique de véhicule automobile, dans lequel, lorsqu'une demande d'arrêt est émise le moteur encore tournant, il est procédé à l'étape de fermeture de la vanne EGR suivie d'abord de l'étape de fermeture de l'admission d'air au plenum du moteur et ensuite de l'étape de coupure d'injection en carburant dans le moteur, tel que les durées respectives des étapes de fermeture de la vanne EGR T1 et de l'admission d'air T3 jusqu'à respectivement le début de l'étape de fermeture de l'admission d'air ou le début de l'étape de coupure d'injection sont minimisées respectivement au moins en fonction du taux de recirculation des gaz brûlés au plenum d'admission d'air au moteur et d'une dépression seuil dans le plenum d'admission d'air au moteur, cette dépression seuil étant déterminée au moins en fonction des frottements internes régnant dans le moteur, la dépression seuil diminuant pour des frottements augmentant.

Ainsi, la durée de l'étape de fermeture de la vanne EGR T1 est de préférence minimisée au moins en fonction du taux de recirculation des gaz brûlés au plenum d'admission d'air au moteur, tandis que la durée de fermeture de l'admission d'air est de préférence minimisée en fonction de la dépression seuil définie plus haut.

L'effet technique est que la minimalisation, au moins en fonction d'une dépression seuil dépendante des frottements internes, de la durée de l'étape d'admission d'air au plenum avant le début de l'étape de coupure d'injection arrêtant le moteur thermique permet d'optimiser la consommation de carburant sans compromettre la prestation arrêt du moteur thermique en ce qui concerne sa durée, les acyclismes, son acoustique, etc. Dans ce procédé, il est tenu compte des frottements internes du moteur, ce qui permet de minimaliser la durée de cette étape selon l'inertie du moteur thermique.

Avantageusement, le procédé comprend une étape de freinage auxiliaire du moteur, le freinage étant exercé par un alternateur ou un alterno-démarreur récupérant l'énergie cinétique du moteur thermique tournant et la transformant en énergie électrique, l'alternateur ou l'alterno-démarreur rechargeant au moins une batterie dans le véhicule automobile, les frottements créés par le freinage auxiliaire étant ajoutés aux frottements internes régnant dans le moteur pour la détermination de la dépression seuil. Ainsi, de l'énergie électrique peut être récupérée lors de la mise en oeuvre du procédé.

Avantageusement, les frottements internes du moteur sont estimés selon la température d'huile du moteur.

Avantageusement, l'étape de fermeture de l'admission d'air commence dès l'obtention d'une valeur de pression dans le plenum inférieure ou égale à une pression seuil prédéterminée juste nécessaire pour ne pas endommager des organes liés à l'admission d'air tels que le turbocompresseur et le volet doseur en Diesel ou le boîtier papillon en essence et l'étape de coupure d'injection commence à la formation d'une dépression suffisante dans le plenum d'admission d'air, la dépression dans le plenum passant en dessous de la dépression seuil.

Avantageusement, la durée de l'étape de fermeture de la vanne EGR avant le début de l'étape de fermeture de l'admission d'air est minimisée de la manière suivante :
- il est calculé une durée minimale pour cette étape étant le maximum d'une première et d'une seconde temporisations seuil, la première temporisation étant fonction du taux de recirculation des gaz brûlés à l'échappement et du débit d'air à l'admission d'air et la seconde temporisation étant fonction de la vitesse de rotation du turbocompresseur et de la température d'huile au niveau des paliers du turbocompresseur,
- cette durée minimale étant prise comme durée de l'étape de fermeture de la vanne EGR avant le début de l'étape de fermeture de l'admission d'air si, premièrement, la pression dans le plenum est inférieure à la pression seuil, cette pression seuil étant fonction au moins du régime du moteur thermique et de la pression atmosphérique et si, secondement, le régime moteur est inférieur à un régime seuil prédéterminé.

Avantageusement, il est mis en place une sécurité consistant à commencer le début de l'étape de coupure d'injection dès le franchissement d'une durée maximale prédéterminée pour la durée de l'étape d'admission d'air jusqu'au début de l'étape de coupure d'injection, ceci même quand la dépression seuil prise en compte pour la minimisation de la durée de cette étape n'a pas été atteinte.

Avantageusement, il est mis en place une sécurité consistant à commencer le début de l'étape de coupure d'injection si l'intégrale dans le temps de la différence entre la pression atmosphérique et la pression dans le plenum depuis le début de l'étape de fermeture de l'admission d'air excède un certain seuil, ceci même quand la valeur du ou des paramètres pris en compte pour la minimisation de la durée de l'étape d'admission d'air jusqu'au début de l'étape de coupure d'injection n'a pas été atteinte.

Avantageusement, le début de l'étape de la fermeture de l'admission d'air dans le moteur est soumis au respect d'un ou de plusieurs critères de protection du moteur thermique relatifs au turbocompresseur, à l'admission d'air au moteur, à la consommation d'huile.

Avantageusement, lorsqu'une demande de préparation d'arrêt est émise à un instant donné, il est procédé à cet instant à la mesure ou à l'estimation d'un ou de plusieurs des paramètres suivants :
- le taux de recirculation des gaz brûlés à l'admission EGR,
- la vitesse de rotation du turbocompresseur,
- la température d'huile au niveau des paliers du turbocompresseur,
- le régime moteur,
   l'étape de la fermeture de l'admission d'air étant débutée en fonction d'un ou de plusieurs de ces paramètres.

L'invention concerne aussi un superviseur de marche et arrêt d'un moteur thermique de véhicule automobile, pour la mise en oeuvre d'un tel procédé, le superviseur comprenant des moyens de mesure ou d'estimation de la pression régnant dans le plenum d'admission d'air du moteur et des moyens de mesure ou d'estimation du taux de recirculation des gaz brûlés au plenum d'admission d'air au moteur, caractérisé en ce qu'il présente des moyens de calcul d'une dépression seuil dans le plenum d'admission d'air au moteur au moins selon les frottements internes régnant dans le moteur, des moyens de comparaison de la dépression seuil avec la mesure de la pression régnante dans le plenum et des moyens de commande de la coupure d'injection en fonction de la comparaison entre dépression seuil et mesure de la pression régnante.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 illustre des courbes de régime moteur et du couple moteur en fonction du temps avec des durées de vannage différentes et un freinage auxiliaire du moteur thermique lors de procédés d'arrêt du moteur thermique différents, les diverses durées des étapes des procédés d'arrêt étant en outre illustrées,
- la figure 2 est une représentation schématique du régime moteur lors d'une succession d'arrêts et de marches d'un moteur thermique avec mention des diverses durées des étapes du procédé d'arrêt du moteur thermique mises en oeuvre.

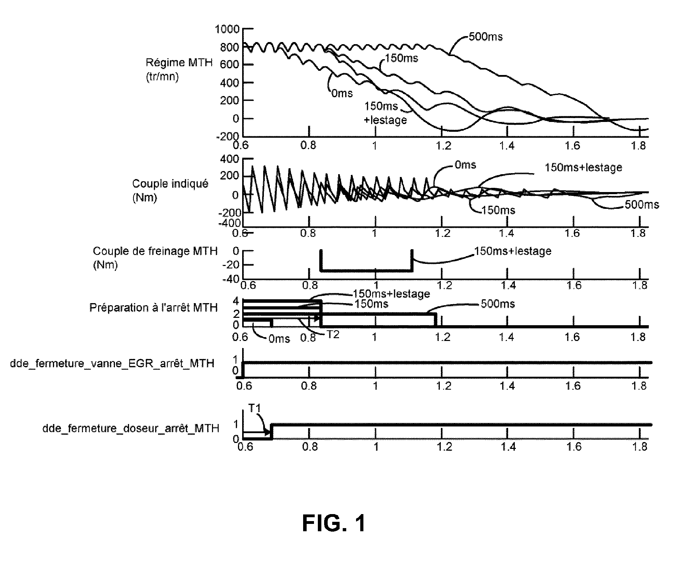

La figure 1 montre différents procédés d'arrêt d'un moteur thermique. Tout paramètre étant égal par ailleurs, par exemple l'inertie ramenée au vilebrequin, la cylindrée, les frottements moteurs, la première durée T1 au bout de laquelle le doseur ou le papillon est fermé après l'apparition de la consigne d'arrêt du moteur thermique, on peut constater l'influence de la durée du vannage correspondant à la différence T2-T1 sur la prestation arrêt du moteur thermique, la durée T2 étant la durée au bout de laquelle la coupure d'injection est effectuée.

Il est en effet effectué différents vannages selon les courbes avec des vannages respectivement à 0, 150 et 500 ms. La durée T1 est celle affichée pour la demande de fermeture du doseur ou papillon ou dde_fermeture_doseur_arrêt_MTH.

Si on considère la durée de l'arrêt du moteur thermique ressentie, la durée nécessaire au régime du moteur thermique pour atteindre ou dépasser en valeur négative le régime nul depuis l'instant de coupure injection on constate :
- qu'avec une durée de vannage importante de 500ms lors de l'étape de préparation à l'arrêt du moteur thermique ou MTH, la durée d'arrêt du moteur thermique ressentie est d'environ 500ms, ce qui est montré à la courbe de régime tandis que les amplitudes de régimes lors des compressions et détentes pendant la phase d'arrêt sont faibles, ce qui est montré par la courbe du couple indiqué en fonction du temps,
- qu'avec une durée de vannage faible de 150ms, la durée d'arrêt du moteur thermique ressentie est d'environ 665ms, toujours visible à la courbe de régime et les amplitudes de régimes dues aux compressions et détentes, montrées à la courbe du couple indiqué, sont plus importantes qu'avec le vannage à 500ms. En revanche la phase de préparation à l'arrêt du moteur thermique est réduite de 165ms par rapport à l'arrêt avec le vannage de 500ms, ce qui est visible à la courbe à la préparation à l'arrêt_MTH.

Tout paramètre égal par ailleurs, on constate également que l'application d'un couple de freinage du moteur thermique, notamment par un alternateur, permet de réduire la durée de la phase de chute de régime et dans une moindre mesure l'amplitude des acyclismes, ce qui conduit à une perception acoustique de l'arrêt du moteur thermique améliorée. Ceci est montré par les courbes 150ms+lestage pour le régime moteur et pour le couple indiqué.

A iso-prestation de l'arrêt du moteur thermique en regard de la durée de chute de régime et de l'amplitude des acyclismes, il est donc possible de réduire la durée de vannage pour diminuer la consommation de carburant si cette réduction est compensée par un couple de freinage auxiliaire pendant la phase d'arrêt. Idéalement ce couple de freinage permet de récupérer une partie de l'énergie cinétique du vilebrequin sous forme électrique via un alternateur ou un alterno-démarreur.

Dans le même registre, le couple résistif lié aux frottements du moteur thermique pour un régime donné peut varier d'une trentaine de Nm pour une température d'eau de refroidissement du moteur comprise entre 0°C et 90°C. Les arrêts du moteur thermique temporaires étant possibles sur certaines applications entres ces deux niveaux de température, tout paramètre égal par ailleurs, la durée de l'arrêt du moteur thermique sera différente : plus courte à 0°C en présence de frottements élevés et plus faible à 90°C en présence de frottements moindres.

A iso-prestation de l'arrêt du moteur thermique en regard de la durée de chute de régime et de l'amplitude des acyclismes, il est donc possible d'ajuster et de réduire la durée de vannage pour diminuer la consommation de carburant si cette réduction est compensée par des frottements du moteur thermique plus importants en raison d'un moteur thermique froid ou en cours de montée en température.

Un compromis existe donc à chaque arrêt du moteur thermique entre la prestation du moteur et la consommation de carburant. Ceci peut être optimisé en fonction des frottements du moteur thermique et de la capacité à freiner le moteur thermique pendant la phase d'arrêt du moteur thermique.

Afin de minimiser la consommation sur un groupe motopropulseur de préférence hybride ou STT, le procédé d'arrêt selon la présente invention, lorsqu'une demande d'arrêt est émise le moteur encore tournant, débute par l'étape de fermeture de la vanne EGR suivie d'abord de l'étape de fermeture de l'admission d'air au plenum du moteur et ensuite de l'étape de coupure d'injection en carburant dans le moteur.

Dans ce procédé, les durées T1, T3 respectives des étapes de fermeture de la vanne EGR et de l'admission d'air jusqu'à respectivement le début de l'étape de fermeture de l'admission d'air ou le début de l'étape de coupure d'injection sont minimisées au moins en fonction d'une dépression seuil dans le plenum d'admission d'air au moteur et du taux de recirculation des gaz brûlés au plenum d'admission d'air au moteur, cette dépression seuil étant déterminée au moins en fonction des frottements internes régnant dans le moteur, la dépression seuil diminuant pour des frottements augmentant.

La dépression seuil se rapproche par conséquent de zéro plus les frottements augmentent. Il n'est donc plus nécessaire de créer une forte dépression dans le plenum quand les frottements internes dans le moteur sont élevés et la durée de vannage ou durée T3 peut être raccourcie.

Avantageusement le procédé comprend une étape de freinage auxiliaire du moteur, le freinage étant exercé par un alternateur ou un alterno-démarreur récupérant l'énergie cinétique du moteur thermique tournant et la transformant en énergie électrique, l'alternateur ou l'alterno-démarreur rechargeant au moins une batterie dans le véhicule automobile, les frottements créés par le freinage auxiliaire étant ajoutés aux frottements internes régnant dans le moteur pour la détermination de la dépression seuil. Le freinage auxiliaire peut être cependant autre que par alternateur ou alterno-démarreur, par exemple par boîte de vitesses.

Avec ce freinage auxiliaire, les frottements dans le moteur thermique augmentent, ce qui réduit la durée T3 dite de vannage entre les débuts de l'étape de fermeture de l'admission d'air au plenum du moteur et de l'étape de coupure d'injection.

Le pilotage de l'alternateur en tant que lestage ou freinage du moteur thermique peut intervenir lorsque le moteur thermique est encore tournant pour recharger la ou les batteries reliées audit alternateur, ceci aussi bien pendant toutes les étapes du procédé qu'une partie de ces étapes.

Sur un groupe motopropulseur STT, il n'y a généralement pas de batterie additionnelle et l'alternateur recharge simplement la batterie 12 Volts conventionnelle. A contrario, sur un groupe motopropulseur hybride thermique et électrique, l'alternateur peut, d'une part, recharger une batterie additionnelle fonctionnant généralement avec une tension plus élevée et, d'autre part, recharger la batterie conventionnelle via un convertisseur de courant continu en courant continu placé en aval du redresseur de l'alternateur.

Un procédé d'arrêt selon l'invention peut être mis en oeuvre par un superviseur de marche et arrêt d'un moteur thermique. Cette fonctionnalité est présente sur tous les groupes motopropulseurs de type STT ou hybride et décide de (re)démarrer le moteur thermique ou de l'arrêter via une consigne de marche du moteur thermique transmise à un coordinateur d'arrêt du moteur thermique pour son pilotage et à la gestion de l'entraînement du moteur thermique si besoin pour les cas de (re)démarrage du moteur thermique.

Un tel superviseur de marche et arrêt d'un moteur thermique de véhicule automobile comprend des moyens de mesure ou d'estimation de la pression régnant dans le plenum d'admission d'air du moteur et des moyens de mesure ou d'estimation du taux de recirculation des gaz brûlés recirculés au plenum d'admission d'air au moteur.

Un superviseur selon la présente invention comporte des moyens de calcul d'une dépression seuil dans le plenum d'admission d'air au moteur selon les frottements internes régnant dans le moteur, des moyens de comparaison de la dépression seuil avec la différence de mesure entre la pression atmosphérique et la pression régnante dans le plenum et des moyens de commande de la coupure d'injection en fonction de la comparaison entre dépression seuil et la différence de mesure entre la pression atmosphérique et la pression régnante dans le plénum.

La figure 2 montre une représentation schématique du régime moteur lors d'une succession d'arrêts et de marches d'un moteur thermique avec les diverses durées des étapes du procédé d'arrêt du moteur thermique mises en oeuvre. Le pilotage du moteur thermique fournit un état du moteur thermique ou Etat MTH comprenant au moins deux états distincts, un état pour lequel le moteur thermique n'est pas pilotable en couple du moteur thermique arrêté et un état moteur thermique tournant pour lequel le moteur thermique est capable de respecter convenablement une consigne de couple au vilebrequin.

L'état du moteur thermique stable associé à une consigne de marche à vrai, désigné sous la dénomination « cns_marche_MTH = 1 » est l'état du moteur thermique tournant. L'état du moteur thermique stable associé à une consigne de marche à faux, désigné sous la dénomination « cns_marche_MTH = 0 » est l'état du moteur thermique arrêté.

Le pilotage du moteur thermique comprend également l'ensemble des fonctionnalités gérant la boucle d'air et les injections pour :
- (re)démarrer/arrêter le moteur thermique en terme d'injection et d'admission d'air frais avec un (re)démarrage du moteur thermique si la consigne de marche du moteur thermique ou « cns_marche_MTH » est à vrai et que l'état du moteur thermique est différent de tournant ou avec un arrêt du moteur thermique si la consigne de marche du moteur thermique est à faux et que l'état du moteur thermique est tournant,
- réaliser la consigne de couple élaborée par la commande couple si le moteur est tournant,
- diagnostiquer des problèmes techniques, par exemple doseur, papillon, capteurs, etc.

Avec un moteur thermique tournant, si le superviseur marche et arrêt du moteur thermique décide d'arrêter le moteur thermique, alors la consigne de marche du moteur thermique ou « cns_marche_MTH » passe de vrai à faux et une phase de préparation à l'arrêt du moteur thermique débute avec les étapes suivantes :
- le moteur thermique est maintenu tournant par la régulation de ralenti, les autres consignes de couple étant systématiquement nulles dans cette situation sinon il n'y aurait pas d'arrêt du moteur thermique temporaire. La recirculation des gaz d'échappement est arrêtée immédiatement avec une demande de fermeture ou « dde_fermeture_vanne_EGR_arrêt_MTH = 1 » si elle est en cours. Le plenum commence à se vider des gaz imbrûlés résiduels, cette étape étant l'étape de fermeture de la vanne EGR,
- après une temporisation courte T1 prise à partir du début de l'arrêt, une demande de fermeture du doseur ou papillon ou « dde_fermeture_doseur_arrêt_MTH = 1 » est émise. La pression interne du plenum diminue en raison du vannage provoqué par la fermeture du doseur ou papillon et du pompage engendré par les cylindres, cette étape étant l'étape de fermeture de l'admission d'air au plenum du moteur thermique,
- après une temporisation longue T2 supérieure à T1, T2 étant prise à partir du début de l'arrêt, une demande de coupure des injections ou « dde_coupure_injection_arrêt_MTH = 1 » est émise, cette étape étant l'étape de coupure d'injection en carburant au moteur thermique. Le moteur thermique quitte alors l'état du moteur thermique tournant et l'arrêt du moteur thermique proprement dit commence : le régime chute avec les injections coupées.

A la figure 2, il est montré la durée T1 et la durée T3 correspondant respectivement à la durée de l'étape de fermeture de la vanne EGR et de l'admission d'air jusqu'à respectivement le début de l'étape de fermeture d'admission d'air ou le début de l'étape de coupure d'injection. La diminution de l'air admis dans les cylindres se fait par fermeture totale du papillon pour un moteur à essence ou du volet doseur pour un moteur Diesel. La coupure de l'injection se fait quand une dépression suffisamment élevée règne dans le plenum, cette dépression étant supérieure à une dépression seuil déterminée au moins en fonction des frottements internes régnant dans le moteur.

En se référant toujours à la figure 2, d'une manière générale, dans ce qui suit on appellera lij l'instant de transition entre la phase i et la phase j de la courbe illustrée à cette figure. La courbe de régime montrée à la figure 2 commence par une mise en route du moteur thermique. On suppose ici qu'il y a nécessairement besoin de démarrer le moteur thermique dès la mise en route du groupe motopropulseur, soit parce que le groupe motopropulseur est de type STT, soit parce que le groupe motopropulseur est hybride et n'est pas alors capable d'assurer une prestation sans ce démarrage du moteur thermique. Ceci peut se passer notamment pour une prestation de couple aux roues insuffisante en raison d'une énergie alternative insuffisante, une prestation relative au confort thermique non réalisable car nécessitant la fourniture de calories par le moteur thermique, etc.

A l'instant I12, la mise en route du groupe motopropulseur débute : c'est la phase d'activation du groupe motopropulseur pendant laquelle la volonté du conducteur n'est pas prise en compte, étant donné que le groupe motopropulseur n'est pas encore dans un état actif pour lequel il est apte à fournir du couple aux roues de manière sécurisée. En présence d'une consigne de marche du moteur thermique « Cns_marche_MTH = 1 » émise par le superviseur marche et arrêt, le moteur thermique est démarré pendant l'activation du groupe motopropulseur et le succès du démarrage conditionne en partie le passage dans l'état du groupe motopropulseur actif, comme il est montré pour la courbe Etat GMP.

A l'instant 123, le moteur thermique est tournant et apte à fournir du couple selon une consigne dictée par le contrôle commande du moteur thermique. Par ailleurs, on suppose que toutes les autres conditions pour débuter le roulage sont vérifiées, par exemple que la motorisation alternative dans le cas d'un groupe motopropulseur hybride est apte à fournir du couple aux roues ou encore qu'en présence d'une boîte de vitesses pilotée celle-ci dispose d'une pression au niveau de sa réserve hydraulique suffisante pour engager ou désengager un rapport. Le cycle de roulage peut donc débuter : l'état groupe motopropulseur passe dans un état actif.

A l'instant 134, toutes les conditions sont réunies pour arrêter le moteur thermique de manière temporaire. Le superviseur marche et arrêt du moteur thermique émet une consigne de marche du moteur thermique à faux ou « cns_marche_MTH = 0 ». C'est à partir de l'instant 134 que débute la première période de temps dite T1 qui se finit à l'instant 145 où la demande de fermeture du doseur ou papillon est demandée.

La procédure d'arrêt du moteur thermique se déroule en deux temps. Le premier temps concerne une phase de préparation à l'arrêt du moteur thermique, appelée aussi phase de vidange plenum d'une durée égale à T2 et le second temps une phase d'arrêt du moteur thermique. En phase de préparation à l'arrêt du moteur thermique en passant par les instants I34 et I56, le moteur thermique se maintient à un certain régime via une régulation de ralenti.

Dès l'instant I34, le superviseur comprenant un coordinateur d'arrêt du moteur demande la fermeture de la vanne EGR ou « dde_fermeture_vanne_EGR_arrêt_MTH = 1 », afin de ne plus recirculer des gaz brûlés à l'admission. Le plenum est vidangé car le moteur thermique continue à fonctionner en régulation de ralenti en utilisant seulement les gaz frais et brûlés contenus dans le plenum et les gaz frais en provenance de l'admission. L'absence de gaz brûlés dans le plenum facilitera le prochain (re)démarrage.

A l'instant 145, soit après une durée T1 à la figure 2 écoulée depuis la demande d'arrêt du moteur thermique et avant la demande de fermeture du papillon ou doseur, le coordinateur d'arrêt du moteur thermique demande la fermeture du volet doseur ou papillon ou « dde_fermeture_doseur_arrêt_MTH = 1 ». La rotation des cylindres crée alors une dépression dans le plenum et la masse d'air admise à chaque admission est ainsi réduite.

Durant la phase d'arrêt passant par les instants 156 à I78, lorsque la dépression dans le plenum atteint un certain seuil à 156, soit après une durée T2 écoulée depuis la demande d'arrêt du moteur thermique, les injections sont coupées après une demande de coupure ou « dde_coupure_injection_arrêt_MTH = 1 ». Le régime du moteur thermique chute alors et ses oscillations sont réduites grâce aux faibles couples de compression et détente dues aux faibles masses d'airs emprisonnées à chaque admission en raison de la dépression régnant dans le plenum.

A l'instant 167, le régime du moteur thermique vu par le superviseur est nul mais celui-ci attend une temporisation dont la durée est égale à I78-I67 afin de se prémunir contre les régimes négatifs dus à des rebonds sur compression.

A l'instant 178, cette temporisation de confirmation est échue et les trois demandes repassent à faux de manière synchrone :
- le doseur est réouvert immédiatement avec « dde_fermeture_doseur_arrêt_MTH = 0 »,
- la demande de coupure injection disparaît avec « dde_coupure_injection_arrêt_MTH = 0 »
- la demande de fermeture de la vanne EGR disparaît avec « dde_fermeture_vanne_EGR_arrêt_MTH = 0 ».

Ensuite, après une phase d'arrêt temporaire le moteur thermique peut être redémarré. Ceci est la procédure normale d'arrêt et de démarrage d'un moteur thermique contrôlé par un superviseur.

Selon la présente invention, la procédure d'arrêt du moteur thermique se déroule comme suit en reprenant les étapes précédemment mentionnées avec les différences suivantes.

L'étape de fermeture de l'admission d'air « dde_fermeture_doseur_arrêt_MTH » commence dès l'obtention d'une valeur de pression dans le plenum égale à une pression seuil prédéterminée juste nécessaire pour réaliser le remplacement des gaz brûlés par de l'air frais. L'étape de coupure d'injection « dde_coupure_injection_arrêt_MTH » commence à la formation d'une dépression suffisante dans le plenum d'admission d'air, la pression dans le plenum passant en dessous de la dépression seuil. Ceci est conditionné à l'obtention de différents critères de protection du moteur thermique, concernant notamment le turbocompresseur, le doseur ou papillon, la consommation d'huile, etc.

Ainsi, une fois les protections du moteur thermique levées, le vannage commence et la durée de vidange du plenum se poursuit jusqu'à la coupure des injections pendant une durée limitée au juste nécessaire en fonction de la pression plenum comparée à la dépression seuil, cette dépression seuil étant fonction des couples résistifs mis en oeuvre pendant l'arrêt du moteur thermique. Les couples résistifs, c'est-à-dire les frottements internes du moteur thermique, peuvent être augmentés par un freinage auxiliaire du moteur par l'alternateur ou l'alternodémarreur.

La fermeture du volet doseur ou du papillon « dde_fermeture_doseur_arrêt_MTH = 1 » intervient au bout d'une durée T1 pouvant être nulle après la fermeture de la vanne EGR. La fermeture du volet doseur ou papillon est conditionnée par l'obtention de différents critères de protection du moteur thermique, ces critères étant fonction du turbocompresseur, du doseur ou du papillon, de la consommation d'huile.

Lorsque la phase de préparation à l'arrêt du moteur thermique débute, certaines caractéristiques de fonctionnement du moteur peuvent être mémorisées, ces caractéristiques pouvant consister en une ou plusieurs des caractéristiques suivantes :
- le taux de recirculation des gaz brûlés à l'admission mesuré à cet instant qui est conservé en mémoire dans le superviseur,
- la mesure ou l'estimation de la vitesse de rotation du turbocompresseur observée à cet instant qui est conservée en mémoire dans le superviseur,
- la mesure ou une estimation de la température d'huile au niveau des paliers du turbocompresseur qui est conservée en mémoire dans le superviseur.

Selon ces mesures ou estimations, il est déterminé une durée minimale pour la durée T1 qui est le maximum de deux temporisations seuil calculées selon au moins une partie des mesures effectuées précédemment mentionnées. La première temporisation seuil est fonction du taux de gaz recirculés et du débit d'air à l'admission, ce qui permet de garantir l'absence de gaz résiduels imbrûlés dans le plenum, cette temporisation pouvant aussi être nulle. La seconde temporisation seuil est fonction de la vitesse de rotation du turbocompresseur et de la température d'huile au niveau des paliers turbocompresseurs, ce qui permet de garantir une usure modérée des paliers turbocompresseurs malgré la chute de pression d'huile pendant l'arrêt du moteur thermique.

Si la mesure ou l'estimation de la pression dans le plenum donne une valeur inférieure à une pression seuil prédéterminée et si le régime du moteur thermique est inférieur à un régime seuil prédéterminé alors il est considéré que les risques liés au turbocompresseur, au doseur ou papillon et à la consommation d'huile sont suffisamment faibles pour autoriser la fermeture du volet doseur ou du papillon, ce qui conduit à une demande de fermeture du doseur ou papillon ou « dde_fermeture_doseur_arrêt_MTH = 1 » et au début de l'étape de fermeture de l'admission d'air par le doseur ou le papillon.

La pression seuil prédéterminée est fonction du régime du moteur thermique et de la pression atmosphérique. Une valeur inférieure de pression garantit, d'une part, l'absence de pompage turbocompresseur, et d'autre part, un effort modéré pour la fermeture du doseur ou du papillon, ce qui permet de moins le solliciter. Une valeur de régime inférieure à un régime seuil permet de limiter le phénomène de refoulement ou blow back en cas de fermeture du doseur ou du papillon.

Une fois les protections du moteur thermique levées, le vannage commence et la durée de vidange plenum se poursuit jusqu'à la coupure des injections pendant une durée limitée au juste nécessaire en fonction de la valeur prise par une dépression seuil déterminée au moins en fonction des frottements internes régnant dans le moteur thermique, une sécurité empêchant la poursuite du vannage même quand la valeur du ou des paramètres pris en compte pour la limitation juste nécessaire de la durée de vannage n'ont pas été atteints.

La dépression seuil dans le plenum qui peut déclencher l'étape de coupure des injections pour arrêter le moteur thermique dès l'obtention d'une telle dépression ou d'une dépression inférieure peut aussi être modulée en fonction d'une ou de plusieurs paramètres relatifs à la capacité de freinage du moteur thermique réalisable par l'alternateur ou tout autre organe permettant de freiner le moteur thermique.

Dans une forme avantageuse de réalisation de l'invention, la durée de vannage T3 prenant place après le début de la fermeture du doseur ou papillon et avant la coupure des injections et qui est la différence entre les durées T2 et T1 dépend au nominal de l'obtention d'une dépression inférieure ou égale à la dépression seuil dans le plenum. Cette durée de vannage T3 avant coupure injection est cependant limitée par une valeur maximale, d'une part, pour limiter les problématiques de consommation d'huile et, d'autre part, pour mettre fin à la phase de vannage malgré une dépression plenum non adéquate en cas d'anomalie, par exemple un doseur ou un papillon bloqué en position ouverte. Ceci est fait par la sécurité précédemment mentionnée.

Par ailleurs, l'étape de vannage provoquée par la fermeture du doseur ou du papillon prenant place avant la coupure de l'injection et présentant cette durée T3 peut être interrompue si l'intégrale dans le temps de la différence entre la pression atmosphérique et la pression dans le plenum depuis le début du vannage excède un certain seuil afin de se prémunir de toute consommation d'huile excessive. Ceci représente une seconde sécurité qui peut être utilisée en alternative avec la première sécurité ou en combinaison avec elle.

La dépression seuil dans le plenum requise pour arrêter le moteur thermique est d'autant plus faible que la capacité de freinage et les frottements du moteur thermique sont importants. En effet, le besoin d'une dépression dans le plenum avant de couper les injections est d'autant plus important que la capacité de freinage du moteur thermique par l'alternateur et les frottements du moteur thermique sont faibles, le but étant de limiter à une valeur raisonnable l'amplitude des acyclismes et le temps d'arrêt du moteur thermique par l'augmentation des couples résistifs et la diminution des couples de compression et détentes, ce qui a été illustré à la figure 1.

Plusieurs paramètres relatifs à la capacité de freinage peuvent être utilisés car la capacité de freinage peut varier en fonction du régime. Ces paramètres peuvent aussi bien être des paramètres relatifs au lestage par l'alternateur ou relatifs aux frottements, les frottements étant aussi variables en fonction du régime.

La capacité de freinage du moteur thermique est fonction de l'état du ou des stockeurs d'énergie alimentés directement ou indirectement par l'alternateur et aussi fonction de la capacité de la façade accessoire à transmettre du couple. Cette capacité est directement liée à son coefficient de glissement qui varie notamment en fonction de la température et de l'humidité.

Les frottements du moteur thermique sont fonction de la température d'huile. L'influence de la température d'air admise dans les cylindres sur les compressions et détentes peut être négligée.

Dès l'obtention d'une dépression dans le plenum inférieure ou égale à la dépression seuil prédéterminée, la phase de préparation à l'arrêt du moteur thermique se termine par la coupure des injections pour arrêter le moteur thermique soit « dde_coupure_injection_arrêt_MTH =1 ». Le moteur thermique quitte alors son état tournant : l'arrêt du moteur thermique proprement dit commence et le régime du moteur thermique chute vers le régime nul avec une vitesse d'autant plus importante que le couple freineur appliqué par l'alternateur est important.

Sans affecter le compromis sur la prestation arrêt du moteur thermique, un procédé d'arrêt selon la présente invention permet de réduire la consommation de carburant, d'une part, en réduisant la phase de préparation à l'arrêt du moteur thermique au juste minimum en fonction de la capacité de freinage du moteur thermique pendant sa phase d'arrêt et, éventuellement d'autre part, en récupérant l'énergie cinétique du moteur thermique lors de l'arrêt avec l'alternateur.

Ainsi, la présente invention vise une minimisation de la consommation de carburant sans modifier le compromis sur la prestation arrêt du moteur thermique. Le superviseur de marche et arrêt utilise des paramètres standards communément relevés sur un moteur thermique : pression mesurée dans le plenum, le taux d'EGR ou taux de recirculation des gaz brûlés à l'échappement, etc..., ces paramètres ne nécessitant pas de nouveaux moyens de détection à installer sur le moteur.

La présente invention est applicable pour tout groupe motopropulseur équipé d'un moteur thermique mais l'invention est particulièrement adaptée aux groupes motopropulseurs hybrides ou STT.

L'invention n'est nullement limitée aux modes de réalisation décrits et illustrés qui n'ont été donnés qu'à titre d'exemples.

## Revendications

1. Procédé d'arrêt d'un moteur thermique de véhicule automobile, dans lequel, lorsqu'une demande d'arrêt est émise le moteur encore tournant, il est procédé à l'étape de fermeture de la vanne EGR (dde_fermeture_vanne_EGR_arrêt_MTH) suivie d'abord de l'étape de fermeture de l'admission d'air (dde_fermeture_doseur_arrêt_MTH) au plenum du moteur et ensuite de l'étape de coupure d'injection (dde_coupure_injection_arrêt_MTH) en carburant dans le moteur, **caractérisé en ce que** les durées (T1, T3) respectives des étapes de fermeture de la vanne EGR et de fermeture d'admission d'air jusqu'à respectivement le début de l'étape de fermeture de l'admission d'air ou le début de l'étape de coupure d'injection sont minimisées respectivement au moins en fonction du taux de recirculation des gaz brûlés au plenum d'admission d'air au moteur et d'une dépression seuil dans le plenum d'admission d'air au moteur, cette dépression seuil étant déterminée au moins en fonction des frottements internes régnant dans le moteur, la dépression seuil diminuant pour des frottements augmentant.

2. Procédé selon la revendication 1, lequel comprend une étape de freinage auxiliaire du moteur, le freinage étant exercé par un alternateur ou un alterno-démarreur récupérant l'énergie cinétique du moteur thermique tournant et la transformant en énergie électrique, l'alternateur ou l'alterno-démarreur rechargeant au moins une batterie dans le véhicule automobile, les frottements créés par le freinage auxiliaire étant ajoutés aux frottements internes régnant dans le moteur pour la détermination de la dépression seuil.

3. Procédé selon l'une quelconque des revendications 1 ou 2, dans lequel les frottements internes du moteur sont estimés selon la température d'huile du moteur.

4. Procédé selon l'une quelconque des revendications précédentes, dans lequel l'étape de fermeture de l'admission d'air (dde_fermeture_doseur_arrêt_MTH) commence dès l'obtention d'une valeur de pression dans le plenum égale à une pression seuil prédéterminée juste nécessaire pour ne pas endommager des organes liés à l'admission d'air tels que le turbocompresseur et le volet doseur en Diesel ou le boîtier papillon en essence et l'étape de coupure d'injection (dde_coupure_injection_arrêt_MTH) commence à la formation d'une dépression suffisante dans le plenum d'admission d'air, la dépression dans le plenum passant en dessous de la dépression seuil.

5. Procédé selon la revendication 4, pour lequel la durée (T1) de l'étape de fermeture de la vanne EGR (dde_fermeture_vanne_EGR_arrêt_MTH) avant le début de l'étape de fermeture de l'admission d'air (dde_fermeture_doseur_arrêt_MTH) est minimisée de la manière suivante :
- il est calculé une durée minimale pour cette étape étant le maximum d'une première et d'une seconde temporisations seuil, la première temporisation étant fonction du taux de recirculation des gaz brûlés à l'échappement et du débit d'air à l'admission d'air et la seconde temporisation étant fonction de la vitesse de rotation du turbocompresseur et de la température d'huile au niveau des paliers du turbocompresseur,
- cette durée minimale étant prise comme durée (T1) de l'étape de fermeture de la vanne EGR (dde_fermeture_vanne_EGR_arrêt_MTH) avant le début de l'étape de fermeture de l'admission d'air (dde_fermeture_doseur_arrêt_MTH) si, premièrement, la pression dans le plenum est inférieure à la pression seuil, cette pression seuil étant fonction au moins du régime du moteur thermique et de la pression atmosphérique et si, secondement, le régime moteur est inférieur à un régime seuil prédéterminé.

6. Procédé selon l'une quelconque des revendications précédentes, pour lequel il est mis en place une sécurité consistant à commencer le début de l'étape de coupure d'injection (dde_coupure_injection_arrêt_MTH) dès le franchissement d'une durée maximale prédéterminée pour la durée (T3) de l'étape de fermeture d'admission d'air jusqu'au début de l'étape de coupure d'injection (dde_coupure_injection_arrêt_MTH), ceci même quand la dépression seuil prise en compte pour la minimisation de la durée (T3) de cette étape n'a pas été atteinte.

7. Procédé selon l'une quelconque des revendications précédentes, pour lequel il est mis en place une sécurité consistant à commencer le début de l'étape de coupure d'injection (dde_coupure_injection_arrêt_MTH) si l'intégrale dans le temps de la différence entre la pression atmosphérique et la pression dans le plenum depuis le début de l'étape de fermeture de l'admission d'air (dde_fermeture_doseur_arrêt_MTH) excède un certain seuil, ceci même quand la valeur du ou des paramètres pris en compte pour la minimisation de la durée (T3) de l'étape d'admission d'air jusqu'au début de l'étape de coupure d'injection (dde_coupure_injection_arrêt_MTH) n'a pas été atteinte.

8. Procédé selon l'une quelconque des revendications précédentes, pour lequel le début de l'étape de la fermeture de l'admission d'air (dde_fermeture_doseur_arrêt_MTH) dans le moteur est soumis au respect d'un ou de plusieurs critères de protection du moteur thermique relatifs au turbocompresseur, à l'organe d'admission d'air au moteur, à la consommation d'huile.

9. Procédé selon la revendication 8, dans lequel, lorsqu'une demande de préparation d'arrêt est émise à un instant donné, il est procédé à cet instant à la mesure ou à l'estimation d'un ou de plusieurs des paramètres suivants:
- le taux de recirculation des gaz brûlés à l'admission EGR,
- la vitesse de rotation du turbocompresseur,
- la température d'huile au niveau des paliers du turbocompresseur,
- le régime moteur,
l'étape de la fermeture de l'admission d'air (dde_fermeture_doseur_arrêt_MTH) étant débutée en fonction d'un ou de plusieurs de ces paramètres.

10. Superviseur de marche et arrêt d'un moteur thermique de véhicule automobile, pour la mise en oeuvre d'un procédé selon l'une quelconque des revendications précédentes, le superviseur comprenant des moyens de mesure ou d'estimation de la pression régnant dans le plenum d'admission d'air du moteur et des moyens de mesure ou d'estimation du taux de recirculation des gaz brûlés au plenum d'admission d'air au moteur, **caractérisé en ce qu'**il présente des moyens de calcul d'une dépression seuil dans le plenum d'admission d'air au moteur au moins selon les frottements internes régnant dans le moteur, des moyens de comparaison de la dépression seuil avec la mesure de la pression régnante dans le plenum et des moyens de commande de la coupure d'injection en fonction de la comparaison entre dépression seuil et mesure de la pression régnante.
